**Europäisches Patentamt**

**European Patent Office**

**Office européen des brevets**

(11) Veröffentlichungsnummer: **0 116 902**
**B1**

(12) # EUROPÄISCHE PATENTSCHRIFT

(45) Veröffentlichungstag der Patentschrift:
**27.09.89**

(51) Int. Cl.⁴: **H 04 L 25/03, H 04 B 7/005**

(21) Anmeldenummer: **84101315.4**

(22) Anmeldetag: **09.02.84**

(54) Verfahren und Anordnung zur empfangsseitigen adaptiven Dämpfungs- und Gruppenlaufzeitsentzerrung.

(30) Priorität: **19.02.83 DE 3305797**

(43) Veröffentlichungstag der Anmeldung:
**29.08.84 Patentblatt 84/35**

(45) Bekanntmachung des Hinweises auf die Patenterteilung:
**27.09.89 Patentblatt 89/39**

(84) Benannte Vertragsstaaten:
**DE FR SE**

(56) Entgegenhaltungen:
**US-A- 3 071 739**

**JOURNAL OF THE ACOUSTICAL SOCIETY OF AMERICA, Band 49, Nr. 3, März 1970, Teil 1, Seiten 639-649, New York, US; J.H. CHANG et al.: "A new class of adaptive array processors"**

(73) Patentinhaber: **ANT Nachrichtentechnik GmbH, Gerberstrasse 33, D-7150 Backnang (DE)**

(72) Erfinder: **Röder, Horst, Dr.-Ing., Im Steinig 20, D-6105 Wembach-Hahn (DE)**
Erfinder: **Bessai, Horst, Dipl.-Ing., Neubauerstrasse 1, D-6761 Stahlberg (DE)**
Erfinder: **Lorek, Werner, Dr.-Ing., Arnimstrasse 20, D-6100 Darmstadt (DE)**

(74) Vertreter: **Wiechmann, Manfred, Dipl.-Ing., ANT Nachrichtentechnik GmbH Gerberstrasse 33 Postfach 11 20, D-7150 Backnang (DE)**

## Beschreibung

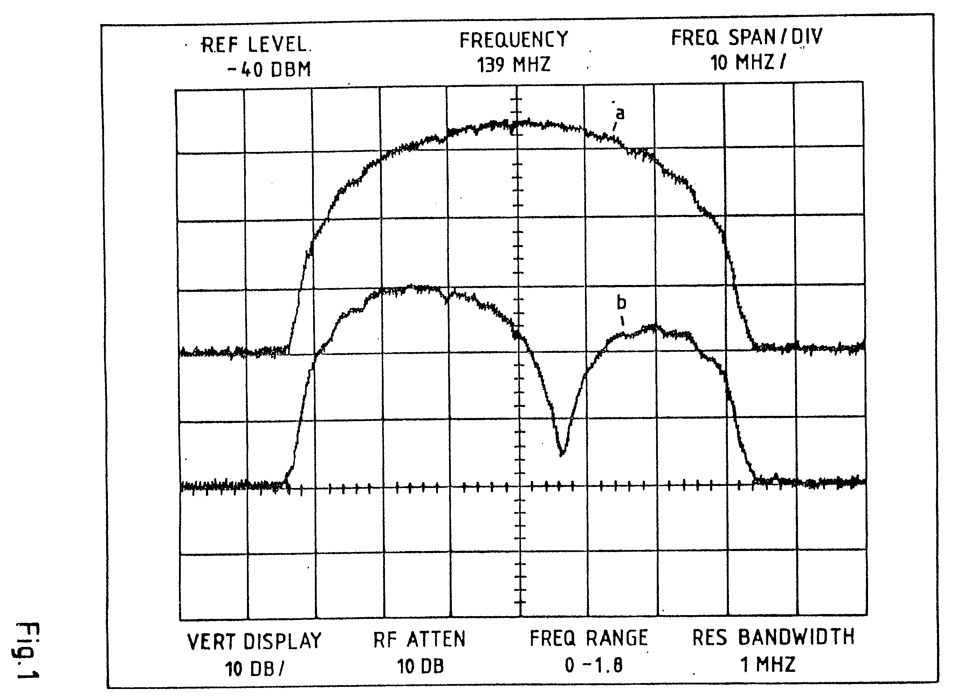

Die Erfindung betrifft ein Verfahren und eine Anordnung zur empfangsseitigen adaptiven Dämpfungs- und Gruppenlaufzeitsentzerrung auf schwundbehafteten digitalen Funkübertragungswegen mit Quadratur-Amplituden-Modulation (QAM) bzw. Phasenumtastung (PSK = Phase Shift Keying). Der Zwei- oder Mehrwegeschwund auf Funkübertragungsstrecken führt zu Verzerrungen des RF-Signals. Fig. 1 zeigt ein übertragenes Signalspektrum mit und ohne Schwund. Der frequenzselektive Einschnitt (Fig. 1b) verursacht eine Verschlechterung der Übertragungsqualität, die sich als Anstieg der Bitfehlerquote auswirkt. Diese Verzerrung des Übertragungskanals kann grundsätzlich von Entzerrern ausgeglichen werden. Im Falle von Schwunderscheinungen im Mikrowellenbereich, die innerhalb von Sekunden auftreten und wieder verschwinden können, muß der Entzerrer adaptiv sein.

Für die Entzerrung empfangener Datensignale im Zeitbereich sind bereits adaptive Entzerrer bekannt (Möhrmann, K., «Einige Verfahren zur adaptiven Einstellung von Entzerrern für die schnelle Datenverarbeitung» NTZ, 24 (1971), Seiten 18 bis 24). Bei dieser Art von Entzerrern werden die Koeffizienten eines Transversalfilters mittels Regelspannungen korrigiert, die aus der mittleren quadratischen Abweichung der empfangenen Zeitfunktion von ihrem Sollwert bestimmt werden. Da die Verzerrungen im Übertragungskanal entstehen, kann man den Entzerrer auch im Frequenzbereich realisieren, indem die Dämpfungs- und Gruppenlaufzeitsverzerrungen des Kanals durch einen einstellbaren Entzerrer beseitigt oder verringert werden. Ein solches Verfahren für Basisbandsignale ist beispielsweise angegeben von W. Schmidt in seiner Arbeit: «An automatic adaptive Equalizer for digital Transmission» Proc. IEEE Symp. Circ. and systems, N. Y. 1978, Seiten 436 bis 440.

Die zitierten Verfahren sind bei niedrigen Basisbandfrequenzen bzw. niedrigen Bitraten realisiert worden und gehen davon aus, daß die Verzerrungen zeitinvariant sind. Beim Auftreten von dynamischen, frequenzselektiven Schwunderscheinungen (z. B. im Richtfunk) hilft man sich durch Verwendung von Diversity-Verfahren.

Der Erfindung liegt die Aufgabe zugrunde, ein Verfahren zur adaptiven Entzerrung für dynamische Dämpfungs- und Gruppenlaufzeitverzerrungen im Zwischenfrequenzbereich anzugeben. Außerdem soll eine Anordnung hierzu angegeben werden.

Diese Aufgabe wird bezüglich des Verfahrens durch die Schritte des Patentanspruchs 1 und bezüglich der Anordnung durch die Merkmale des Patentanspruchs 2 gelöst.

Im folgenden wird die Erfindung anhand von Fig. 1 bis 3 näher erläutert. Es zeigen

Fig. 1 die bereits erwähnten Signalspektren mit und ohne Schwund,

Fig. 2 ein Blockschaltbild der Schaltungsanordnung nach der Erfindung,

Fig. 3 ein Prinzipschaltbild des in einem Ausführungsbeispiel verwendeten Lee-Wiener-Entzerrers.

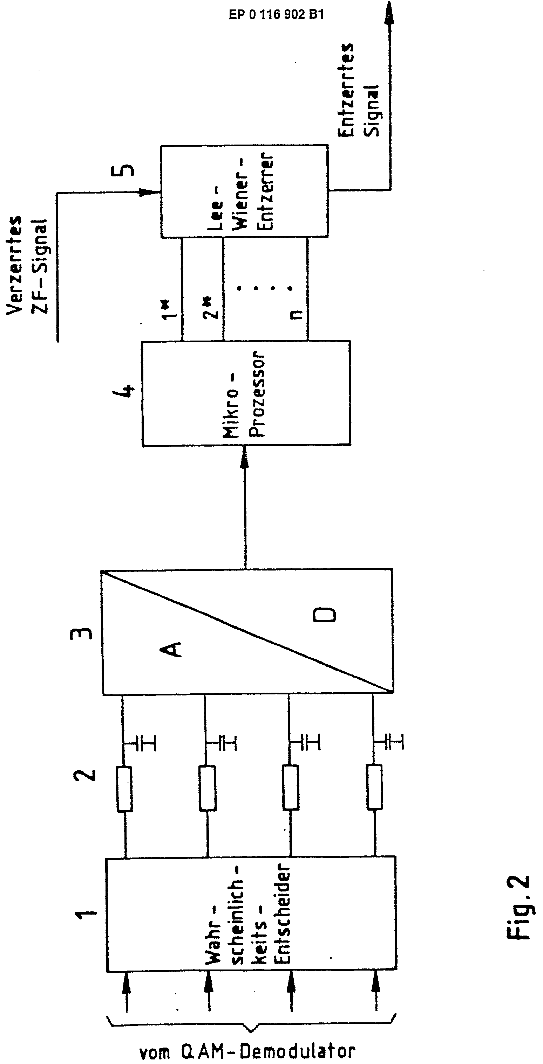

Fig. 2 zeigt das Blockschaltbild der Anordnung nach der Erfindung. Ein an den Regeneratorausgängen, also hinter dem QAM-Demodulator liegender Wahrscheinlichkeitsentscheider 1 mißt die Häufigkeitsverteilung der diskreten Amplitudenstufen im demodulierten Signal, entscheidet über die Wahrscheinlichkeit der auftretenden diskreten Amplitudenstufen und erzeugt über integrierende Tiefpässe 2 und einen Analog-Digital-Wandler 3 ein digitales Steuersignal für einen Mikroprozessor. Die Tiefpässe 2 sind derart bemessen, daß über mehrere Symboldauern die Abweichung vom Mittelwert der Amplitudenstufen ermittelbar ist. Der Mikroprozessor 4 vergleicht die ankommende tatsächliche Wahrscheinlichkeit der Amplitudenverteilung mit der theoretisch zu erwartenden bzw. gesendeten Wahrscheinlichkeit. Aus der Abweichung – Differenz – von Soll- und Ist-Wert berechnet der Mikroprozessor 4 die analogen Regelgrößen für die Koeffizienten eines vorzugsweise für den Zwischenfrequenzbereich von 140 MHz ausgelegten Lee-Wiener-Entzerrers 5, der aus einer Kaskadenschaltung von Allpässen erster Ordnung besteht, wie sie beispielsweise von Y. W. Lee in seiner Arbeit «Synthesis of Electrical Networks by means of the Fourier-Transforms of Laguerre's Functions» Journ. Math. Phys. 11 (1932), Seiten 83 bis 113, beschrieben wurden.

Die n vom Mikroprozessor 4 aus veränderbaren Filterkoeffizienten verstellen die Übertragungsfunktion des Lee-Wiener-Entzerrers 5 so, daß an dessen Ausgang die Dämpfungs- und Gruppenlaufzeitverzerrungen des empfangenen Signals ausgeglichen sind.

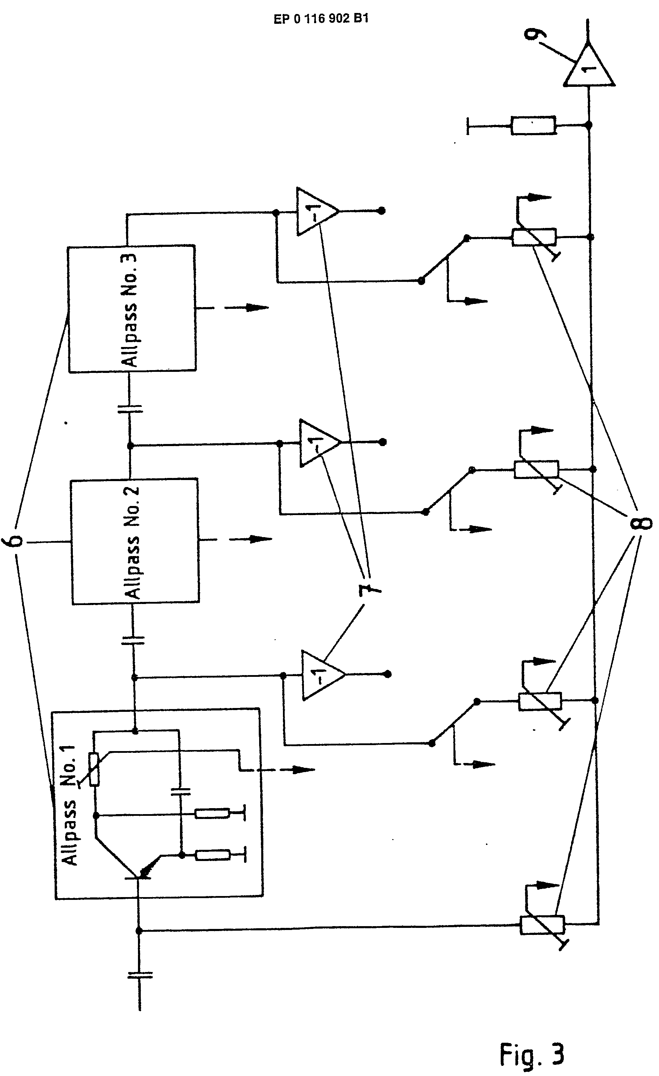

Fig. 3 zeigt das Prinzipschaltbild des mikroprozessorgesteuerten adaptiven Lee-Wiener-Entzerrers. Der hier gewählte dreistufige Aufbau mit den drei Allpässen 6 zeigt insgesamt zehn durch Pfeile gekennzeichnete Steueranschlüsse für den Mikroprozessor, von denen aber je nach Anwendungsfall ein Teil durch festeinstellbare Regler bzw. Schalter ersetzt werden kann. Mit Hilfe von Invertern 7 läßt sich das Vorzeichen der Filterkoeffizienten bedarfsweise umkehren.

Die vier in Fig. 3 unten dargestellten Potentiometer 8 werden bei Anschluß des Lee-Wiener-Entzerrers an den Mikroprozessor durch Feldeffekttransistoren ersetzt. In einem realisierten Beispiel waren dies die vom Mikroprozessor aus angesprochenden Stellgrößen. Der ausgangsseitige Emitterfolger 9 dient zur Entkopplung.

## Patentansprüche

1. Verfahren zur empfangsseitigen adaptiven Dämpfungs- und Gruppenlaufzeitsentzerrung auf schwundbehafteten digitalen Funkübertragungswegen mit Quadratur-Amplituden-Modulation (QAM) bzw. Phasenumtastung (PSK = Phase Shift Keying), dadurch gekennzeichnet, daß zunächst die Häufigkeitsverteilung der diskreten Amplitudenstufen im demodulierten Signal gemessen, in der Steuereinheit eines Mikroprozessors (4) mit den entsprechenden Erwartungswerten verglichen und die Differenz zum Steuern der Koeffizienteneinstellglieder eines im zwischenfrequenten Zweig des Empfängers angeordneten Lee-Wiener-Entzerrers (5) verwendet wird (4, 5, Fig. 2).

2. Anordnung zur empfangsseitigen adaptiven Dämpfungs- und Gruppenlaufzeitsentzerrung auf schwundbehafteten digitalen Funkübertragungswegen mit Quadratur-Amplituden-Modulation (QAM) bzw. Phasenumtastung (PSK = Phase Shift Keying), insbesondere zum Durchführen des Verfahrens nach Anspruch 1, dadurch gekennzeichnet, daß an den Demodulator ein Wahrscheinlichkeitsentscheider (1) angeschaltet ist, der die Häufigkeitsverteilung der diskreten Amplitudenstufen im demodulierten Signal feststellt, daß dem Wahrscheinlichkeitsentscheider (1) integrierende Tiefpaßfilter (2) nachgeschaltet sind, die derart bemessen sind, daß über mehrere Symboldauern die Abweichung vom Mittelwert der Amplitudenstufen ermittelbar ist, daß die intergrierenden Tiefpaßfilter (2) über einen Analog-Digital-Wandler (3) mit den Steuereingängen eines Mikroprozessors (4) verbunden sind, welcher die tatsächlich ankommende Wahrscheinlichkeit der Amplitudenverteilung mit einer Sollverteilung vergleicht, daß der Mikroprozessor (4) ausgangsseitig mit Eingängen zur Koeffizienteneinstellung eines Lee-Wiener-Entzerrers (5) verbunden ist und daß dem Lee-Wiener-Entzerrer (5) das verzerrte zwischenfrequente Signal zugeführt ist (1–5, Fig. 2).

## Claims

1. A method for the adaptive attenuation and group delay equalization at the receiving side on digital radio relays subject to fading by means of phase quadrature amplitude modulation (QAM) or phase shift keying (PSK), characterized in that first the frequency distribution of the discrete amplitude intervals in the demodulated signal is measured, compared in the control unit of a microprocessor (4) with the corresponding expected values and the difference is used for the control of the coefficient-setting member of a Lee-Wiener rectifier (5) disposed in the intermediate frequency branch of the receiver (4, 5, Figure 2).

2. An arrangement for the adaptive attenuation and group delay equalization at the receiving side on digital radio relays subject to fading by means of phase quadrature amplitude modulation (QAM) or phase shift keying (PSK), in particular for performing the method in accordance with claim 1, characterized in that a probability indicator (1) is connected to the demodulator which determines the frequency distribution of the discrete amplitude intervals in the demodulated signal, in that integrating low-pass filters (2) are switched downstream of the probability indicator (1), which are designed in such a way that the deviation from the mean value of the amplitude phases can be detected over several symbol lengths, in that the integrated low-pass filters (2) are connected with the control inputs of a microprocessor (4) via an analog-digital converter (3), which compares the actually existing probability of the amplitude distribution with a nominal distribution, in that the microprocessor (4) is connected at the output side with the inputs for setting the coefficient of a Lee-Wiener rectifier (5) and in that the distorted, intermediate-frequency signal is supplied to the Lee-Wiener rectifier (5) (1–5, Figure 2).

## Revendications

1. Procédé de correction adaptative d'atténuation et de temps de propagation de groupe, côté réception, sur des voies hertziennes de transmission numérique affectées d'évanouissement, avec modulation d'amplitude en quadrature de phase (QAM) ou encore avec manipulation de phase (PSK = Phase Shift Keying), caractérisé par le fait que la distribution de fréquence des échelons d'amplitude discrets dans le signal démodulé est d'abord mesurée, comparée, dans l'unité de commande d'un microprocesseur (4), aux valeurs attendues correspondantes, et la différence est utilisée pour commander les éléments de réglage de coefficient d'un correcteur de Lee-Wiener (5) agencé dans la branche à fréquence intermédiaire du récepteur (4, 5 fig. 2).

2. Agencement de correction adaptative d'atténuation et de temps de propagation de groupe, côté réception, sur des voies hertziennes de transmission numérique affectées d'évanouissement, avec modulation d'amplitude en quadrature de phase (QAM) ou encore avec manipulation de phase (PSK = Phase Shift Keying), notamment pour mettre en œuvre le procédé selon revendication 1, caractérisé par le fait qu'un décideur de probabilité (1) est branché sur le démodulateur et constate la distribution de fréquence des échelons d'amplitude discrets dans le signal démodulé, par le fait que le décideur de probabilité (1) est suivi de filtres passe-bas intégrants (2) qui sont dimensionnés de manière que l'écart par rapport à la valeur moyenne des échelons d'amplitude puisse être déterminé sur plusieurs durées de symbole, par le fait que les filtres passe-bas intégrants (2) sont reliés, par l'intermédiaire d'un convertisseur analogique-numérique (3), aux entrées de commande d'un microprocesseur (4), lequel compare la probabilité effectivement arrivante de la distribution d'amplitude à une distribution de référence, par le fait que le microprocesseur (4) est relié, côté sortie, à des entrées de réglage de coefficient d'un correcteur de Lee-Wiener (5), et par le fait que le signal à fréquence intermédiaire affecté de distorsion est transmis au correcteur de Lee-Wiener (5) (1–5, fig. 2).

FREQ SPAN/DIV
10 MHZ/

RES BANDWIDTH
1 MHZ

FREQ RANGE
0 – 1.8

FREQUENCY
139 MHZ

FREQ RANGE
0 – 1.8

RF ATTEN
10 DB

REF LEVEL.
–40 DBM

VERT DISPLAY
10 DB/

a

b

Fig.1

Fig. 2

EP 0 116 902 B1

Fig. 3

Allpass No. 1

Allpass No. 2

Allpass No. 3

−1

−1

−1

6

7

8

9

1

EP 0 116 902 B1